Europäisches Patentamt

European Patent Office

Office européen des brevets

(11) Numéro de publication: **0 243 240 B1**

(12) **FASCICULE DE BREVET EUROPEEN**

(45) Date de publication de fascicule du brevet: **01.04.92**

(51) Int. Cl.5: **G01S 5/00**, G08C 15/12, G10K 11/00, G01V 1/22

(21) Numéro de dépôt: **87400844.4**

(22) Date de dépôt: **14.04.87**

(54) **Dispositif de trajectographie acoustique partiellement transportable et réutilisable.**

(30) Priorité: **18.04.86 FR 8605645**

(43) Date de publication de la demande:
**28.10.87 Bulletin 87/44**

(45) Mention de la délivrance du brevet:
**01.04.92 Bulletin 92/14**

(84) Etats contractants désignés:
**DE ES IT**

(56) Documents cités:
**FR-A- 1 547 366      US-A- 3 506 954
US-A- 3 990 036      US-A- 4 004 265
US-A- 4 072 923      US-A- 4 218 767**

(73) Titulaire: **THOMSON-CSF
51, Esplanade du Général de Gaulle
F-92800 Puteaux(FR)**

(72) Inventeur: **Bertheas, Jean
THOMSON-CSF SCPI 19, avenue de Messine
F-75008 Paris(FR)**
Inventeur: **Loubieres, Bernard
THOMSON-CSF SCPI 19, avenue de Messine
F-75008 Paris(FR)**
Inventeur: **Cammas, Henri
THOMSON-CSF SCPI 19, avenue de Messine
F-75008 Paris(FR)**

(74) Mandataire: **Turlèque, Clotilde et al
THOMSON-CSF SCPI
F-92045 PARIS LA DEFENSE CEDEX 67(FR)**

EP 0 243 240 B1

Rank Xerox (UK) Business Services

## Description

L'invention se rapporte au domaine de la localisation acoustique de mobiles sous-marins, et a plus particulièrement pour objet un dispositif de trajectographie acoustique partiellement transportable et réutilisable.

La localisation d'un mobile par rapport au fond de la mer est obtenue par la connaissance de sa position par rapport à des points fixes liés au fond. Une technique pour obtenir la trajectoire d'un mobile coopératif, est de munir ce dernier d'un émetteur acoustique, et de recevoir les émissions produites par ce mobile sur des capteurs acoustiques ancrés au fond. L'exploitation des instants d'arrivée de l'émission sur au moins trois capteurs permet d'obtenir la position du mobile par rapport aux capteurs à l'instant où le signal acoustique a été émis. Si cet instant d'émission est connu, le calcul est fait par les distances : la localisation est dite de type "sphérique". Si l'instant d'émission n'est pas connu le calcul est fait par les distances relatives : la localisation est dite de type "hyperbolique". Lorsque le système de trajectographie couvre une zone fixe, les capteurs acoustiques ancrés au fond sont reliés à une station de traitement, fixe également, par exemple à terre.

Par contre, pour pouvoir localiser des mobiles pendant des périodes courtes sur des sites différents, il est nécessaire de disposer de systèmes de trajectographie "transportables", c'est-à-dire faciles à installer et éventuellement réutilisables.

Pour cela, la partie immergée constituée de l'ensemble des capteurs acoustiques est récupérable en partie si les capteurs sont montés dans un ensemble à flottabilité positive, c'est-à-dire conçu pour remonter à la surface par télécommande d'un dispositif qui le désolidarise du lest d'ancrage. Dans de tels systèmes, le navire utilisé pour le mouillage des capteurs et pour leur éventuelle récupération sert également de station de traitement.

On connaît des systèmes de trajectographie qui utilisent, comme ensembles de réception immergés, des balises acoustiques répondeuses. Ces balises sont émettrices et sont particularisées, c'est-à-dire qu'elles émettent, lorsqu'elles sont interrogées par le mobile à localiser, un signal codé qui leur est propre. Ces signaux contiennent l'information de l'instant d'arrivée, et sont reçus par l'unité de traitement. Dans ce type de systèmes la mesure des instants d'arrivée est liée à un trajet acoustique entre le mobile et la balise répondeuse, à la réception par cette balise, à un second trajet acoustique entre la balise émettrice et le système de réception, et à une seconde réception acoustique au niveau du système de réception ; cette succession de transformations conduit à une dégradation de la précision. De plus, les balises répondeuses sont évidemment plus compliquées que des balises simplement réceptrices acoustiquement.

De ce fait, d'autres types de trajectographes sont développés dans lesquels l'ensemble de réception immergé est composé de balises acoustiques identiques, uniquement réceptrices acoustiquement. Evidemment dans ce cas chaque balise doit transmettre l'information au moyen de connexions, électriques ou optiques, immergées et connectées à une unité centrale de traitement. L'opération de mouillage de ces ensembles immergés est alors plus compliquée. De plus l'unité de traitement doit être relativement immobile et silencieuse pour ne pas introduire de bruit acoustique au niveau des balises réceptrices. Au lieu de connexions, comme indiqué ci-dessus, une autre solution consiste à relier chaque balise à une bouée de surface ancrée pour constituer un ensemble indépendant, l'ensemble des bouées de surface communiquant avec l'ensemble de réception à bord du navire par voie hertzienne. Ce type de système a cependant un certain nombre d'inconvénients :

- le coût est important car le nombre de bouées est égal au nombre de balises, de l'ordre de quelques dizaines pour couvrir un zone normale de trajectographie ;
- le nombre de voies hertziennes de réception à bord du navire doit être égal au nombre d'ensembles balises/bouées, ce qui complique le système de réception nécessaire à bord du navire et augmente également le coût.

L'invention a pour objet un dispositif de trajectographie acoustique partiellement transportable et réutilisable, aussi performant que les derniers dispositifs décrits ci-dessus mais en même temps plus simple et de moindre coût.

Selon l'invention le dispositif de trajectographie acoustique, pour la localisation de mobiles coopératifs marins ou sous-marins munis d'émetteurs d'ondes acoustiques, comportant un ensemble de balises immergées, une bouée de surface possédant des moyens d'émission-réception par voie hertzienne et un centre de traitement, qui peut être embarqué à bord d'un navire, le centre de traitement et la bouée de surface communiquant par voie hertzienne, et des moyens de couplage électrique entre bouée de surface et balises immergées, est caractérisé en ce que les balises immergées toutes semblables sont groupées en au moins un chapelet de n balises, reliées électriquement en série par un câble unique, au moins une extrémité du câble étant reliée électriquement par des moyens de couplage à la bouée, la bouée et les balises communiquant par messages de format fixe qui transistent par voie électrique sur le câble selon un chronogramme prédéterminé, un message d'interrogation transmis par la bouée au câble provoquant l'interrogation successive de toutes les balises du chapelet et la génération de messages de réponses correspondants renvoyés vers la bouée radio, chaque balise répétant un message d'interrogation reçu vers la balise suivante du chapelet et répétant un message de réponse reçu de la balise suivante vers la balise précédente dans le chapelet.

L'invention sera mieux comprise et d'autres caractéristiques apparaîtront à l'aide de la description qui suit en référence aux figures annexées.

- La figure 1 représente les principaux sous-ensembles qui composent le dispositif de trajectographie ;
- La figure 2 représente une balise immergée ;
- La figure 3 représente un schéma synoptique du circuit électronique interne à chaque balise ;
- La figure 4 est le schéma synoptique de la bouée radio du dispositif ;
- La figure 5 est un exemple de chronogramme des signaux émis et reçus pour un sous-ensemble immergé à huit balises.

D'une manière générale, le dispositif de trajectographie selon l'invention comporte un certain nombre de balises identiques, reliées entre elles au moyen d'un seul câble coaxial de faible diamètre, formant ainsi un chapelet de balises dont l'une des extrémités est reliée à une bouée de surface unique. La liaison entre la bouée de surface et le navire portant l'unité de traitement s'effectue par voie hertzienne. Il est prévu un traitement effectuant la datation des instants d'arrivée des signaux dans chaque balise et permettant le multiplexage des données en mode asynchrone sur le câble coaxial qui fonctionne alors comme un bus série. La description précise ci-après va permettre de mettre en évidence l'ensemble des points caractéristiques.

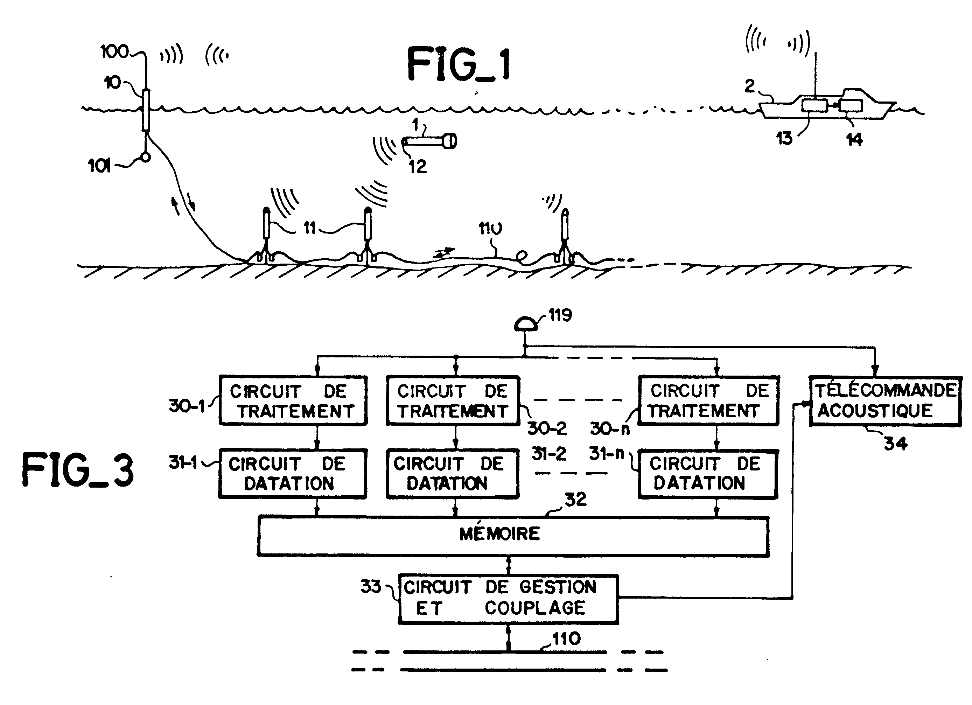

La figure 1 représente les principaux sous-ensembles qui composent le système complet de trajectographie. Il comporte au moins une bouée de surface, 10, munie de son antenne aérienne d'émission-réception par voie hertzienne, 100, et d'un lest 101. Plusieurs balises acoustiques réceptrices identiques ancrées au fond, telles que 11, sont reliées entre elles par un câble de transmission 110 où transitent les informations, de la manière indiquée ci-après. Chaque mobile tel que 1 à localiser est muni d'un émetteur acoustique 12 spécialisé, ou "pinger". A bord du bâtiment de surface 2 comportant l'unité de réception et de traitement, on distingue un coffret d'interface 13 qui assure, via la bouée de surface 10, la réception des informations provenant des balises d'une part et la transmission des commandes d'autre part, dans les deux cas via la bouée radio 10, et un calculateur de trajectographie 14 couplé à ce coffret d'interface. Ces éléments connus ne seront pas détaillés.

Dans l'exemple représenté, une extrémité du câble est reliée à une bouée de surface. Il est possible de relier chaque extrémité du chapelet de balises à une bouée de surface, de façon à assurer le fonctionnement même en cas de panne d'une bouée ou en cas de rupture du câble entre deux balises de l'ensemble.

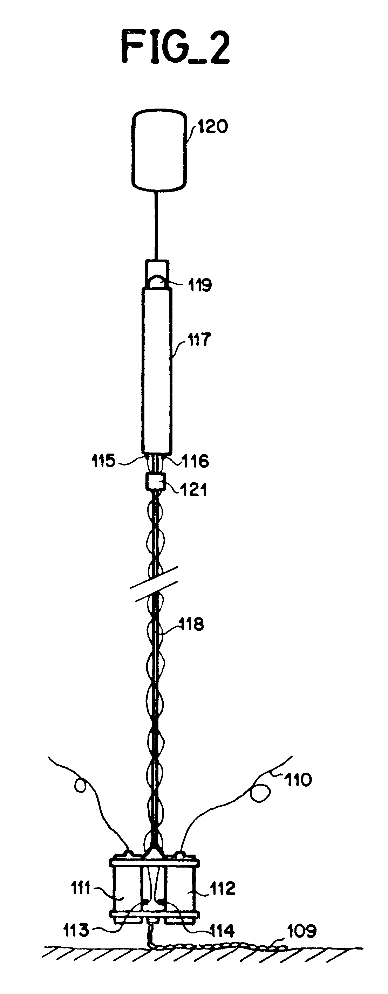

La figure 2 représente plus en détails une balise immergée. Un seul câble électrique relie les balises ; il y a une chaîne d'ancrage 109 par balise. Chaque balise comporte deux dévidoirs pour le câble de transmission 110, l'un 111 destiné à la partie amont du câble, l'autre 112 destiné à sa partie aval. Les extrémités fixes du câble dans les dévidoirs, respectivement 113 et 114 sont reliées aux deux entrées de signal électrique 115 et 116 du corps de la balise 117 par des câbles. Le corps de la balise 117 est fixé mécaniquement à la plaque supérieure qui maintient les deux dévidoirs par un fil de nylon 118. Le corps de la balise est surmonté d'un transducteur acoustique 119 et un flotteur 120 est prévu pour maintenir la balise ancrée au fond dans une position stable et pour la faire remonter à la surface lorsque nécessaire comme indiqué ci-après. En effet, selon une caractéristique de l'invention, cette balise est en plus munie d'un dispositif de libération du corps de la balise avec son flotteur ; ce dispositif de libération 121 comporte une cisaille et est placé sur le câble de nylon 118 et les parties aller et retour du câble coaxial 110 entre la partie ancrage et le corps 117 de la balise, à proximité de ce dernier. Ainsi, sur commande de libération, transmise comme il sera expliqué ci-après, le dispositif de libération cisaille le fil de nylon et le câble coaxial de façon à permettre la récupération du corps de la balise avec son flotteur, les dévidoirs et le câble restant au fond avec la chaîne d'ancrage. La commande de libération, pour la récupération de la balise est soit acoustique, à partir d'un émetteur apporté à proximité par un bateau, soit électrique, par le câble de transmission via la bouée radio. Des détails supplémentaires seront décrits ci-après.

Pour le mouillage de ces balises, chaque balise est lâchée en chute libre au-dessus du point théorique où elle doit être positionnée, cette chute entraînant le dévidement simultané des deux parties amont et aval du câble 110 par rapport à la balise. Le câble amont fini par se poser et s'accroche aux aspérités du fond. Pour minimiser les risques de rupture du câble coaxial entre deux balises, la longueur de câble prévue entre le dévidoir aval d'une balise et le dévidoir amont de la balise suivante est largement supérieure à la distance prévue entre ces deux balises. Ainsi le câble n'est pas tendu avec le dévidoir aval de la bouée précédente du fait de ces sur-longueurs de sécurité.

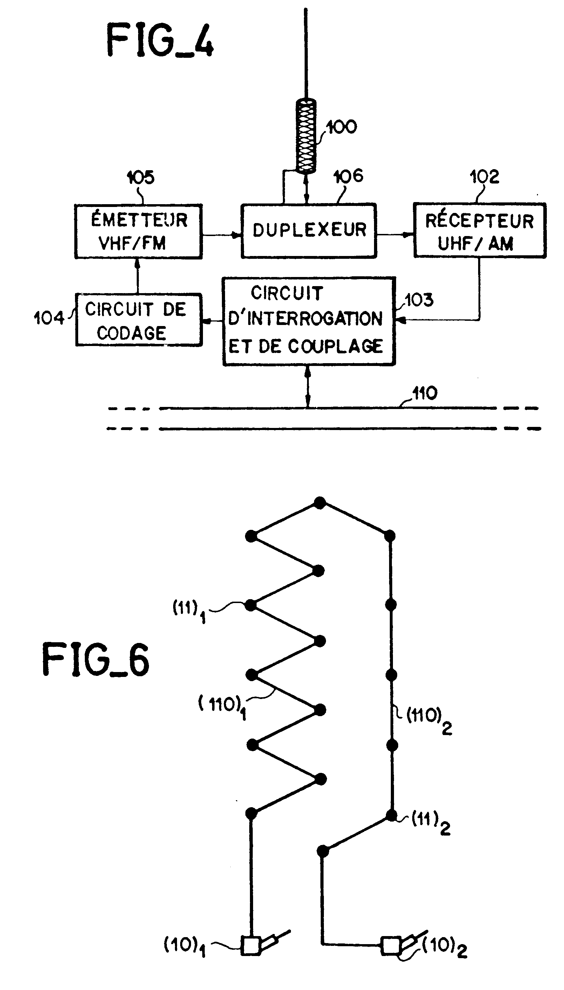

La figure 3 représente le schéma synoptique du circuit électronique interne à chaque balise, inséré dans le corps 117, qui reçoit d'une part les signaux acoustiques provenant du ou des émetteurs portés par les mobiles à localiser dont on souhaite effectuer la trajectographie, et d'autre part les signaux électriques de commande provenant du circuit de traitement à bord du bateau via la bouée radio 10 et le câble de transmission 110. Comme indiqué ci-dessus ces balises, qui sont toutes identiques, sont passives, c'est-à-dire n'émettent aucun signal acoustique, et, selon une caractéristique de l'invention, les informations extraites par les balises sont transmises sur le câble 110 en réponse aux signaux de commande envoyés par la bouée de surface. L'hydrophone 119 reçoit le signal acoustique éventuellement composite si plusieurs mobiles sont à localiser simultanément. Il y a n voies de traitement parallèles prévues dans le corps de la balise qui traitent des bandes de fréquence distinctes affectées aux différents émetteurs de trajectographie, et éventuellement des messages de télémesure associés. Chaque voie de traitement comporte donc un circuit de traitement, 30-1, 30-2....30-n, réalisant les opérations classiques de filtrage, d'hétérodynage, de contrôle automatique de gain, d'extraction du signal utile dans le bruit etc... Les signaux émis par les mobiles sont codés en "SFSK" (Separated Frequency Shift Keying selon la terminologie anglo-saxonne) c'est-à-dire au moyen de deux fréquences caractéristiques. Chaque circuit de traitement comporte deux voies qui correspondent aux deux fréquences du code et élabore un signal différentiel qui est ensuite numérisé. Puis le signal numérique obtenu est corrélé avec une copie qui tient compte de l'effet Doppler. Le résultat de cette corrélation fournit un pic qui par comparaison avec un seuil prédéterminé permet d'effectuer la datation.

Cette datation est effectuée pour chaque voie de traitement dans des circuits 31-1, 31-2...31-n. Lorsque le pic de corrélation dépasse le seuil, un compteur est déclenché dans le circuit de datation correspondant.Il compte les périodes d'une horloge (de stabilité $10^{-7}$), jusqu'à la réception du signal suivant émis par le même mobile. En effet les mobiles émettent périodiquement, par exemple avec une récurrence de 500 ms. Le contenu du compteur de chacun des circuits de datation est stocké avec une récurrence plus faible, toutes les 200 ms par exemple, sous forme numérique dans une mémoire tampon 32. Cette mémoire tampon est lue par interrogation périodique provenant de la bouée radio 10. La liaison entre la mémoire 32 et le câble coaxial 110 est assurée par un circuit classique de gestion et de couplage 33. Le corps de la balise comporte également un circuit de réception électrique de la télécommande de largage, 34, éventuellement doublé d'un circuit de réception acoustique, cette télécommande étant soit électrique via la bouée radio 10 et le câble coaxial 110, soit acoustique, via l'hydrophone 119.

Le schéma synoptique de la bouée radio 10 est représenté sur la figure 4. Cette bouée comporte une antenne de type fouet 100 couplée à des circuits classiques de réception 102 et d'émission 105 via un circuit duplexeur 106. Le récepteur 102 est couplé à un circuit d'interrogation et de couplage 103 lui-même relié au câble coaxial 110. La transmission des signaux d'interrogation se fait du navire à la bouée radio par voie hertzienne, puis de la bouée aux balises immergés par le câble 110. Les informations de retour transitent par le câble coaxial 110 et sont transmises au circuit d'interrogation et de couplage 103 relié par ailleurs à un circuit de codage 104. Le circuit de codage est lui-même relié au circuit d'émission 105. Le circuit d'interrogation envoie périodiquement un message d'interrogation vers le chapelet de balises ; les balises répondent alors aux messages. Selon une caractéristique de l'invention il n'y a qu'un seul message d'interrogation pour l'ensemble des balises. Pour cela, les signaux transitent sur le câble coaxial alternativement dans les deux sens suivant un chronogramme déterminé qui obéit aux règles de fonctionnement suivantes :

- seul le circuit interrogateur 102 de la bouée prend l'initiative d'émettre en transmettant un signal d'interrogation ;
- tous les messages ont la même taille en nombre de bits et donc la même durée ;
- chaque balise reçoit le message d'interrogation par l'amont, c'est-à-dire par la balise voisine la plus proche de la bouée radio, et le répète vers l'aval c'est-à-dire vers la bouée voisine la plus éloignée de la bouée radio avec un retard légèrement supérieur à la moitié de la durée du message ;
- le message de réponse de chaque balise suite aux messages d'interrogation est émis vers la bouée amont, défini comme indiqué ci-dessus, avec un retard légèrement supérieur à la durée du message ;
- de plus, chaque balise répète les messages de réponse qu'elle reçoit de l'aval vers l'amont avec un retard prédéterminé légèrement supérieur à la moitié de la durée du message.

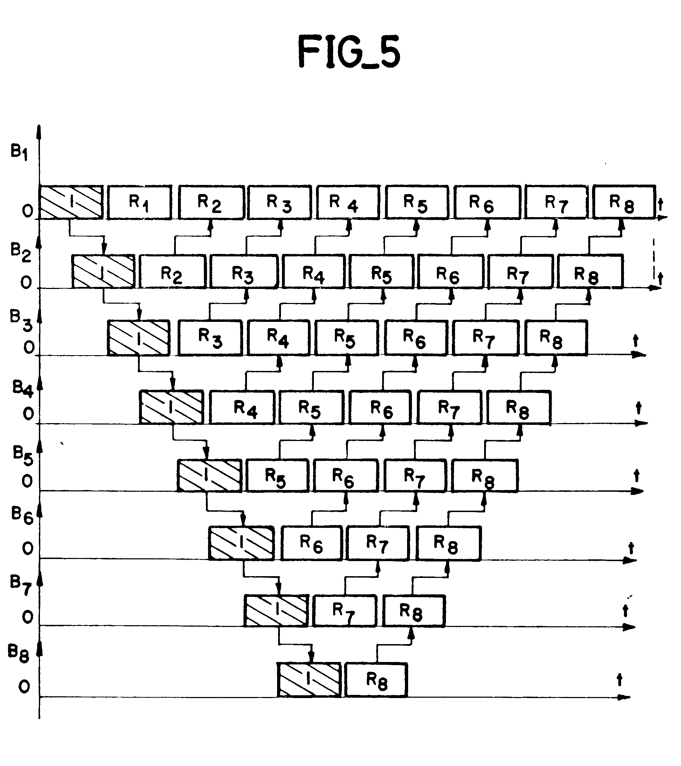

Ces règles permettent d'obtenir à chaque interrogation les réponses de toutes les balises interconnectées, étalées dans le temps et sans risque de mélange. La figure 5 est un exemple de chronogramme correspondant à ce mode de fonctionnement pour un chapelet de huit balises. Le message d'interrogation noté I est retransmis à la balise suivante par chaque balise, comme indiqué ci-dessus, avec un retard légèrement supérieur à la moitié de la durée du message. Les réponses $R_1$ de la première balise, $R_2$ de la seconde balise.... $R_8$ de la huitième balise sont établies comme indiqué ci-dessus et retransmis à chaque balise précédente dans la chaîne.

Chaque message d'interrogation comporte un nombre de bits déterminé contenant un signal de synchronisation et donnant le type de messages. Chaque message est systématiquement répété mais certains messages ne doivent être exécutés que par une seule balise à la fois, notamment l'ordre de largage qui doit d'abord atteindre la dernière balise, puis l'avant dernière etc... Pour ne pas particulariser les balises, le message d'interrogation correspondant à l'ordre de largage peut contenir un mot dont un seul bit a la valeur 1 : la position du bit à 1 dans le mot correspond à la balise qu'il faut commander. Dans ce cas, à chaque répétition du message d'interrogation, pour chaque balise à larguer, le bit à 1 est déplacé vers la position immédiatement inférieure. Seule la balise qui trouvera le bit à 1 dans une position prédéterminée, par exemple dans la position 1, exécutera l'ordre correspondant.

Chaque message de réponse comporte un même nombre de bits que le message d'interrogation, et a donc la même durée. Il contient comme le message d'interrogation la synchronisation et les instants d'arrivée de signaux acoustiques émis par les mobiles à localiser sous forme d'une heure pour chaque voie, cette heure ou date étant établie comme indiqué précédemment. La récurrence des interrogations est inférieure à celle des émissions acoustiques de trajectographie de façon à ne pas perdre d'information. Par exemple 200 ms et 500 ms comme vu précédemment.

Pour obtenir le fonctionnement indiqué ci-dessus, le circuit 33 de chaque balise, effectuant la gestion et le couplage de cette balise au câble coaxial fonctionne simultanément en répondeur pour envoyer les messages de réponse vers l'avant et en répéteur pour envoyer le message d'interrogation à la balise suivante, après régénération numérique des messages.

En fonction de ce qui a été indiqué ci-dessus, il est possible d'établir la liste des différents types de messages susceptibles d'être transmis par le centre de traitement à bord du navire aux balises par l'intermédiaire de la bouée radio :

- message d'interrogation normale de trajectographie ;
- mise en état de veille de la balise ;
- réactivation de la balise ;
- autotest ;
- lecture du compteur interne de chaque balise ;
- émission d'une séquence de calibration ;
- largage.

Les procédures d'échange et de transmission des messages ne sont pas décrites ici car elles font partie de l'état de l'art.

Le dispositif de trajectographie peut comporter plusieurs chapelets de balises chacun associé à une bouée radio ou au plus à deux bouées de façon à mieux couvrir un espace dans lequel se déplacent les mobiles immergés à localiser.

La figure 6 représente un exemple d'implantation de deux chapelets de balises, chacun comportant huit balises. La bouée radio 10, le câble 110 et une balise 11 sont affectés des indices 1 et 2 respectivement pour les deux chapelets de balises.

Des données numériques sont données ci-après à titre d'exemple de réalisation : dans un dispositif de trajectographie comportant cinq voies de traitement dans chaque balise, c'est-à-dire un dispositif destiné à la localisation d'au plus cinq mobiles simultanément : le dispositif a été réalisé avec un câble de transmission coaxial, référence 110 sur les figures, de diamètre 2,5 mm. Les données ont été transmises par un code de transmission dit code biphase à la cadence de 20 Kbits par seconde. Le nombre de bits de chaque message était 256 bits, la récurrence des messages d'interrogation étant de 200 millisecondes. La récurrence des messages émis par les mobiles était elle de 500 millisecondes. En ce qui concerne l'implantation des balises, la distance maximum entre deux balises successives a été choisie égale à 4000 mètres.

**Revendications**

1. Dispositif de trajectographie acoustique, pour la localisation de mobiles coopératifs marins ou sous-marins (1) munis d'émetteurs d'ondes acoustiques (12), comportant un ensemble de balises immergées, une bouée de surface (10) possédant des moyens d'émission-réception (100, 106, 102, 105) par voie hertzienne et un centre de traitement (13, 14), qui peut être embarqué à bord d'un navire (2), le centre de traitement et la bouée de surface communiquant par voie hertzienne, et des moyens de couplage électrique entre bouée de surface et balises immergées, caractérisé en ce que les balises immergées (11) toutes semblables sont groupées en au moins un chapelet de n balises, reliées électriquement en série par un câble unique (110), au moins une extrémité du câble étant reliée électriquement par des moyens de couplage (103) à la bouée, la bouée et les balises communiquant par messages de format fixe qui transitent par voie électrique sur le câble selon un chronogramme prédéterminé, un message d'interrogation transmis par la bouée au câble provoquant l'interrogation successive de toutes les balises du chapelet et la génération de messages de réponses correspondants renvoyés vers la bouée radio, chaque balise répétant un message d'interrogation reçu vers la balise suivante du chapelet et répétant un message de réponse reçu de la balise suivante vers la balise précédente dans le chapelet.

2. Dispositif selon la revendication 1, caractérisé en ce que, en vue d'une réutilisation sur un autre site, le corps de chaque balise, muni d'un flotteur, peut être séparé de la partie ancrage, chaque balise comportant un dispositif de largage commandable à distance (34).

3. Dispositif selon la revendication 2, caractérisé en ce que le dispositif de largage (34) comporte un circuit de réception électrique, les ordres de largage étant transmis sélectivement à chaque balise par le câble électrique.

4. Dispositif selon la revendication 3, caractérisé en ce que le circuit de réception électrique du dispositif de largage (34) est doublé d'un circuit de réception acoustique offrant la possibilité de larguer par télécommande acoustique.

5. Dispositif selon l'une quelconque des revendications 1 à 4, caractérisé en ce qu'un message d'interrogation (I) reçu par une balise est répété pour la balise suivante avec un décalage supérieur ou égal à la moitié de la durée du message, le message de réponse (Ri) de la balise suivante élaboré dès réception du message d'interrogation étant émis à destination de la balise précédente avec un décalage supérieur ou égal à la moitié de la durée du message, de façon que le message de réponse de cette balise précédente (Ri-1) puisse être élaboré dès réception du message d'interrogation et terminé avant le début de la réception du message de réponse (Ri) de la balise suivante, tous les messages de réponse (R1, R2,..., Rn) issus des balises d'un chapelet étant transmis de proche en proche sur le câble à destination de la bouée radio.

## Claims

1. An acoustic trajectographic device for the localization of moving cooperating marine or submarine objects (1) provided with acoustic wave transmitters (12), comprising an arrangement of submerged markers, a surface buoy (10) possessing radio transmission and reception means (100, 106, 102 and 105) and a treatment center (13 and 14), which may be taken on board a ship (2), the center of treatment and the surface buoy communicating by radio, and means for electrical coupling between the surface buoy and the submerged markers, characterized in that the submerged markers (11), which are identical, are grouped in at least one chain of n markers, connected electrically in series by a single cable (110), at least one end of the cable being connected electrically by the coupling beans (103) with the buoy, the buoy and the markers communicating by fixed format messages which pass electrically along the cable in accordance with a predetermined time schedule, one interrogation message transmitted by the buoy to the cable causing the successive interrogation of all the buoys of the chain and the generation of corresponding response messages sent back to the radio buoy, each marker relaying a received interrogation message to the following marker of the chain and relaying a response message received from the following marker to the preceding marker in the chain.

2. The device as claimed in claim 1, characterized in that, for the purpose of re-use at another site, the body of each marker, provided with a float, may be separated from the anchoring part, each marker comprising a remote controlled jettison device (34).

3. The device as claimed in claim 2, characterized in that the jettison device (34) comprises an electrical receiving circuit, the orders for jettison being transmitted selectively to each marker through the electrical cable.

4. The device as claimed in claim 3, characterized in that the electrical receiving circuit of the jettison device (34) is duplicated by an acoustic receiving circuit offering the possibility of jettison by acoustic remote control.

5. The device as claimed in any one of the preceding claims 1 through 4, characterized in that an interrogation message (I) received by a marker is relayed for the following markers with an shift equal to or greater than half the duration of the message, the response message (Ri) of the following marker produced as from the reception of the interrogation message being transmitted to the preceding marker as a destination with a shift equal to or greater than half the duration of the message in such a manner that the response message (Ri-1) of the said preceding marker may be processed as from the reception of the interrogation message and terminated before the start of the reception of the response message (Ri) of the following marker, all the response messages (R1, R2,...Rn) for the markers of a chain being transmitted from one marker to the next one along the cable with the radio buoy as a destination.

## Patentansprüche

1. Einrichtung zur akustischen Bahnverfolgung für die Lokalisierung von mit Schallwellensendern (12) versehenen, zusammenarbeitenden See- oder Unterseefahrzeugen (1), mit einer Gruppe von Unterwasserbaken, einer Sender- und Empfänger-Funkmittel (100, 106, 102, 105) aufweisenden Oberflächenboje (10), einem Verarbeitungszentrum (13, 14), das sich an Bord eines Schiffes (2) befinden kann, wobei das Verarbeitungszentrum und die Oberflächenboje auf dem Funkweg miteinander kommunizieren, und elektrischen Kopplungsmitteln zwischen der Oberflächenboje und den Unterwasserbaken, dadurch gekennzeichnet, daß die sämtlich einander ähnlichen Unterwasserbaken (11) zu wenigstens einer Kette von n Baken, die mittels eines einzigen Kabels (110) elektrisch in Reihe geschaltet sind, gruppiert sind, wobei wenigstens ein Ende des Kabels über Kopplungsmittel (103) mit der Boje elektrisch verbunden sind, wobei die Boje und die Baken mittels Nachrichten festen Formats, die entsprechend einer vorgegebenen Zeitsteuerung im Kabel auf elektrischem Weg übertragen werden, miteinander kommunizieren, wobei eine von der Boje auf das Kabel ausgesendete Abfragenachricht die aufeinanderfolgende Abfrage sämtlicher Baken der Kette und die Erzeugung von entsprechenden, zur Funkboje zurückgeschickten Nachrichten bewirkt und wobei jede Bake eine empfangene Abfragenachricht für die folgende Bake der Kette reproduziert und eine von der folgenden Bake empfangene Antwortnachricht für die vorhergehende Bake der Kette reproduziert.

2. Einrichtung gemäß Anspruch 1, dadurch gekennzeichnet, daß im Hinblick auf eine Wiederverwendung an einem anderen Ort der mit einem Schwimmer versehene Körper einer jeden Bake vom Verankerungsteil gelöst werden kann, wobei jede Bake eine über eine Entfernung hinweg steuerbare Abwurfeinrichtung (34) aufweist.

3. Einrichtung gemäß Anspruch 2, dadurch gekennzeichnet, daß die Abwurfeinrichtung (34) eine elektrische Empfangsschaltung aufweist, wobei die Abwurfbefehle über das Elektrokabel wahlweise an jede Bake gesendet werden.

4. Einrichtung gemäß Anspruch 3, dadurch gekennzeichnet, daß die elektrische Empfangsschaltung der Abwurfeinrichtung (34) durch eine akustische Empfangsschaltung ergänzt ist, die die Möglichkeit des Abwurfs mittels akustischer Fernsteuerung bietet.

5. Einrichtung gemäß einem der Ansprüche 1 bis 4, dadurch gekennzeichnet, daß eine von einer Bake empfangene Abfragenachricht (I) für die folgende Bake mit einer Verzögerung, die größer oder gleich der halben Dauer der Nachricht ist, reproduziert wird, wobei die Antwortnachricht (Ri) der folgenden Bake, die seit dem Empfang der Abfragenachricht erstellt worden ist, an die vorhergehende Bake mit einer Verzögerung, die größer oder gleich der halben Dauer der Nachricht ist, ausgesendet wird, derart, daß die Antwortnachricht dieser vorhergehenden Bake (Ri-1) seit dem Empfang der Abfragenachricht erstellt und vor dem Beginn des Empfangs der Antwortnachricht (Ri) der folgenden Bake beendet werden kann, wobei sämtliche von den Baken einer Kette ausgegebenen Antwortnachrichten (R1, R2,...,Rn) schrittweise über das Kabel an die Funkboje gesendet werden.

# FIG_1

100
10
101
1
12
2
13    14
11
110
119

# FIG_3

| 30-1 CIRCUIT DE TRAITEMENT | CIRCUIT DE TRAITEMENT | 30-2  30-n | CIRCUIT DE TRAITEMENT | TÉLÉCOMMANDE ACOUSTIQUE |

31-1 CIRCUIT DE DATATION    CIRCUIT DE DATATION    31-2  31-n    CIRCUIT DE DATATION    34

32

MÉMOIRE

33 CIRCUIT DE GESTION ET COUPLAGE

110

EP 0 243 240 B1

# FIG_2

FIG_4

FIG_6

# FIG_5